# EUROPÄISCHE PATENTANMELDUNG

(11) **EP 4 212 074 A2**
(43) Veröffentlichungstag der Anmeldung: **19.07.2023**
(21) Anmeldenummer: 22209529.1
(22) Anmeldetag: 25.11.2022
(51) Int. Cl.: A47K 13/26

(54) **BEFESTIGUNGSVORRICHTUNG**

(30) Priorität: 26.11.2021 DE 102021213373; 15.12.2021 DE 102021133299
(71) Anmelder: MKW Kunstsstofftechnik GmbH, 4675 Weibern (AT)
(72) Erfinder: DANNER, Stefan, 4673 Gaspoltshofen (AT)
(74) Vertreter: Kilian Kilian & Partner

(57) **Zusammenfassung**

Die Erfindung betrifft eine Befestigungsvorrichtung (1) zur Befestigung eines WC-Sitzes an einer Sanitärkeramik, aufweisend:
einen sich entlang einer Längsrichtung erstreckenden Gewindebolzen (10), der bestimmungsgemäß in Richtung der Längsrichtung in eine in der Sanitärkeramik vorgesehene Bohrung/Öffnung (2) einführbar ist, und
eine drehbar auf dem Gewindebolzen (10) gelagerte Kipplasche (11), welche auf dem Gewindebolzen (10) in der Längsrichtung durch Drehung des Gewindebolzens (10) verfahrbar ist, wobei
die Kipplasche (11) in einem Montagezustand in einer ersten Längsausrichtung in Bezug auf den Gewindebolzen (10) ausgerichtet ist, so dass der Gewindebolzen (10) gemeinsam mit der Kipplasche (11) bestimmungsgemäß in die Bohrung/Öffnung (2) einführbar ist,
die Kipplasche (11) in einem Befestigungszustand nach dem Einführen in die Bohrung/Öffnung (2) aufgrund einer in Bezug auf die Drehlagerung vorliegenden Gewichtsverteilung bestimmungsgemäß von selbst in eine Querausrichtung kippt, so dass die Kipplasche (11) durch Drehung des Gewindebolzens (10) in einer der Bohrung/Öffnung (2) zugewandten Richtung derart verfahrbar ist, dass sie sich an der Sanitärkeramik abstützt, und
die Kipplasche (11) bestimmungsgemäß durch Drehung des Gewindebolzens (10) in einer der Bohrung/Öffnung (2) abgewandten Richtung in einen Demontagezustand verfahrbar ist, in der die Kipplasche (11) aufgrund der in Bezug auf die Drehlagerung vorliegenden Gewichtsverteilung von selbst in eine zweite Längsausrichtung weiter kippt, so dass der Gewindebolzen (10) gemeinsam mit der Kipplasche (11) aus der Bohrung/Öffnung (2) entnehmbar ist.

## Beschreibung

Die vorliegende Erfindung betrifft eine Befestigungsvorrichtung zur Befestigung eines WC-Sitzes an einer Keramik.

Aus dem Stand der Technik sind Befestigungsvorrichtungen für WC-Sitze bekannt, welche insbesondere zur Befestigung von WC-Sitzen an Hohlraumkeramiken eingesetzt werden.

Beispielsweise ist in der europäischen Patentveröffentlichung EP 3 741 275 A1 eine solche Befestigungsvorrichtung gezeigt.

Bei dieser ist das Befestigungselement als sogenannte "Kipplasche" ausgebildet, welche drehbar auf einem Gewindebolzen gelagert und in einer Längsrichtung durch Drehung des Gewindebolzen verfahrbar ist. Während des Verfahrens verstellt sich die Kipplasche zwischen einer vertikalen Längsausrichtung, in welcher die Kipplasche bestimmungsgemäß in die Bohrung/Öffnung der Keramik eingeführt werden kann, und einer horizontalen Querausrichtung, in welcher sich die Kipplasche zur Befestigung der Befestigungsvorrichtung bestimmungsgemäß an der Keramik abstützt. Ein Führungselement führt die Kipplasche bei diesem Vorgang, indem es ein Mitdrehen der Kipplasche mit dem rotierenden Gewindebolzen verhindert.

Problematisch ist hierbei, dass Bauteile, wie das Führungselement, zur Befestigung der Kipplasche bzw. der Befestigungsvorrichtung vorgesehen werden müssen, wodurch die Befestigungsvorrichtung insgesamt konstruktiv aufwändig ist und erhöhte Kosten in der Herstellung nach sich zieht.

Weiterhin sind Befestigungsvorrichtungen bekannt, bei welchen Teile der Befestigungsvorrichtung, wie Muttern oder beispielsweise die Kipplasche, bei Lösen in den Hohlraum der Keramik fallen, was verständlicherweise nicht wünschenswert ist, weil sie nicht wiederverwendbar sind. Darüber hinaus können diese Teile nur mit erheblichem Aufwand aus dem Hohlraum der Keramik geborgen werden. Diesbezüglich erforderliches Werkzeug liegt einem Laien in der Regel nicht vor.

Vor diesem Hintergrund ist es Aufgabe der vorliegenden Erfindung, eine Befestigungsvorrichtung zu schaffen, welche mit möglichst geringem technischen Aufwand befestigbar, lösbar und wiederverwendbar ist.

Diese Aufgabe wird mit einer Befestigungsvorrichtung gemäß einem ersten Aspekt der Erfindung, welcher in Patentanspruch 1 definiert ist, gelöst. Bevorzugte Ausführungsformen sind Gegenstand der Unteransprüche.

*Gemäß dem ersten Aspekt der Erfindung ist eine Befestigungsvorrichtung zur Befestigung eines WC-Sitzes an einer Sanitärkeramik vorgesehen, welche hierfür Folgendes aufweist:*
*einen sich entlang einer Längsrichtung erstreckenden Gewindebolzen, der bestimmungsgemäß in Richtung der Längsrichtung in eine in der Sanitärkeramik vorgesehene Bohrung*/*Öffnung einführbar ist, und*
*eine drehbar auf dem Gewindebolzen gelagerte Kipplasche, welche auf dem Gewindebolzen in der Längsrichtung durch Drehung des Gewindebolzens verfahrbar ist, wobei*
*die Kipplasche in einem Montagezustand in einer ersten Längsausrichtung in Bezug auf den Gewindebolzen ausgerichtet ist,* so *dass der Gewindebolzen gemeinsam mit der Kipplasche bestimmungsgemäß in die Bohrung*/*Öffnung einführbar ist,*
*die Kipplasche in einem Befestigungszustand nach dem Einführen in die Bohrung*/*Öffnung aufgrund einer in Bezug auf die Drehlagerung vorliegenden Gewichtsverteilung bestimmungsgemäß von selbst in eine Querausrichtung kippt,* so *dass die Kipplasche durch Drehung des Gewindebolzens in einer der Bohrung*/*Öffnung zugewandten Richtung derart verfahrbar ist, dass sie sich an der Keramik abstützt, und*
*die Kipplasche bestimmungsgemäß durch (entgegengesetzte) Drehung des Gewindebolzens in einer der Bohrung*/*Öffnung abgewandten Richtung in einen Demontagezustand verfahrbar ist, in dem die Kipplasche aufgrund der in Bezug auf die Drehlagerung vorliegenden Gewichtsverteilung von selbst in eine zweite Längsausrichtung weiter kippt,* so *dass der Gewindebolzen gemeinsam mit der Kipplasche aus der Bohrung*/*Öffnung entnehmbar ist.*

Die Befestigungsvorrichtung dient bevorzugt zur Verbindung eines WC-Sitzes bzw. eines Gelenkes des WC-Sitzes mit der Sanitärkeramik, die insbesondere die Form eines WC aufweist. Die Sanitärkeramik ist insbesondere hohl ausgeführt und besitzt demnach eine zugängliche Außenoberfläche und eine unzugängliche Innenoberfläche, welche Teile einer Wand der Sanitärkeramik sind. Die Innenoberfläche und die Außenoberfläche verlaufen bevorzugt parallel.

Die Bohrung/Öffnung durchdringt die Wand der Sanitärkeramik bevorzugt senkrecht zur Innen- bzw. Außenoberfläche. Die Bohrung/Öffnung ermöglicht bevorzugt das Einführen der Befestigungsvorrichtung in den Hohlraum der Sanitärkeramik.

Der Gewindebolzen umfasst bevorzugt zwei Endabschnitte, wobei der erste Endabschnitt bevorzugt in die Bohrung/Öffnung eingeführt wird und der zweite Endabschnitt zugänglich an der Außenoberfläche verbleibt.

Der Montagezustand ist bevorzugt ein Zustand der Befestigungsvorrichtung, in welchem diese in die Sanitärkeramik einführbar ist. Bei Einführen des Gewindebolzens und der Kipplasche in die Sanitärkeramik hält ein Anwender Letztere bevorzugt mit dem Finger, so dass die Kipplasche erst innerhalb der Sanitärkeramik zu kippen beginnen kann. Der Befestigungszustand ist bevorzugt ein Zustand der Befestigungsvorrichtung, in welchem diese sich in der Sanitärkeramik befindet und nach dem Kippen an der Sanitärkeramik durch Drehung des Gewindebolzens befestigbar ist. Der Demontagezustand ist letztendlich bevorzugt ein Zustand der Befestigungsvorrichtung, in welchem diese von der Sanitärkeramik lösbar/herausnehmbar ist.

Der Gewindebolzen weist vorzugsweise zumindest abschnittsweise ein entlang der Längsrichtung verlaufendes Außengewinde auf. Das Außengewinde verläuft/befindet sich bevorzugt im Bereich des ersten Endabschnitts des Gewindebolzens.

Das Kippen der Kipplasche erfolgt aufgrund der in Bezug auf die Drehlagerung vorliegenden Gewichtsverteilung bevorzugt in einer einheitlichen Drehrichtung.

Infolge der vorliegenden, bevorzugt ungleichmäßigen, Gewichtsverteilung der Kipplasche kippt diese bevorzugt in Abhängigkeit von einer Position der Kipplasche auf dem Gewindebolzen vom Montagezustand in den Befestigungszustand sowie bevorzugt vom Befestigungszustand in den Demontagezustand. Somit kann eine Zustandsänderung durch Verfahren der Kipplasche auf dem Gewindebolzen erfolgen. Hierdurch entfällt der Einsatz von Werkzeugen und/oder das Vorsehen weiterer (notwendiger) Führungselemente zur Führung der Kipplasche.

*Vorzugsweise weist die Kipplasche einen Anschlag auf, welcher eingerichtet ist, die Kipplasche in der Querausrichtung zu halten, indem der Anschlag am Gewindebolzen anliegt und ein weiteres Kippen der Kipplasche infolge der vorliegenden Gewichtsverteilung verhindert.*

*Des Weiteren kann die erfindungsgemäße Befestigungsvorrichtung derart ausgestaltet sein, dass der Anschlag durch das Verfahren der Kipplasche in den Demontagezustand einen Endabschnitt des Gewindebolzens überschreitet und folglich nicht mehr am Gewindebolzen anliegt,* so *dass die Kipplasche infolge der vorliegenden Gewichtsverteilung in die zweite Längsausrichtung (weiter)kippt.*

Bevorzugt ist die zweite Längsausrichtung eine Ausrichtung der Kipplasche, bei welcher der Anschlag der Kipplasche in Bezug auf die Drehlagerung in der der Bohrung/Öffnung abgewandten Richtung angeordnet ist. *Weiterhin kann die erfindungsgemäße Befestigungsvorrichtung derart ausgebildet sein, dass die Kipplasche an einer Seite eine längliche Öffnung bzw. ein Langloch aufweist, welches im Befestigungszustand den Anschlag ausbildet.*

Eine weitere Aufgabe der vorliegenden Erfindung ist es, eine Befestigungsvorrichtung zu schaffen, welche eine verlustfreie Demontage ermöglicht.

Diese Aufgabe wird mit einer Befestigungsvorrichtung gemäß dem zweiten Aspekt der Erfindung, welcher in Patentanspruch 9 definiert ist, gelöst.

*Gemäß einem zweiten Aspekt der Erfindung ist eine Befestigungsvorrichtung zur Befestigung eines WC-Sitzes an einer Sanitärkeramik vorgesehen, welche hierfür Folgendes aufweist:*
*einen sich entlang einer Längsrichtung erstreckenden Gewindebolzen, der bestimmungsgemäß in Richtung der Längsrichtung in eine in der Sanitärkeramik vorgesehene Bohrung*/*Öffnung einführbar ist, und*
*eine auf dem Gewindebolzen gelagerte Kipplasche, welche auf dem Gewindebolzen in der Längsrichtung durch Drehung des Gewindebolzens verfahrbar ist, wobei*
*der Gewindebolzen gemeinsam mit der Kipplasche in einem Montagezustand bestimmungsgemäß in die Bohrung*/*Öffnung einführbar ist,*
*die Kipplasche in einem Befestigungszustand durch Drehung des Gewindebolzens (10) in einer der Bohrung*/*Öffnung (2) zugewandten Richtung derart verfahrbar ist, dass sie sich an der Sanitärkeramik abstützt, und*
*die Kipplasche bestimmungsgemäß durch Drehung des Gewindebolzens in einer der Bohrung*/*Öffnung abgewandten Richtung in einen Demontagezustand verfahrbar ist,* so *dass der Gewindebolzen gemeinsam mit der Kipplasche aus der Bohrung*/*Öffnung entnehmbar ist, wobei*
*der Gewindebolzen an einem Endabschnitt eine Beschränkung aufweist, welche das Verfahren der Kipplasche über den Demontagezustand hinaus begrenzt.*

Die Beschränkung kann beispielsweise eine Drehbegrenzung sein.
*Bevorzugt ist die Beschränkung derart ausgebildet, dass die Kipplasche (11) sich beim Verfahren in der der Bohrung*/*Öffnung (2) abgewandten Richtung nicht von dem Gewindebolzen (10) lösen kann.*

Die Beschränkung/Drehbegrenzung bewirkt somit, dass der Gewindebolzen bei der Demontage der Befestigungsvorrichtung nicht vollständig von der Kipplasche gelöst werden kann. Somit kann sich die Kipplasche nicht durch ein zu weites Verfahren der Kipplasche in Richtung des ersten Endabschnittes vom Gewindebolzen lösen und in den Hohlraum der Keramik fallen.

*Die Beschränkung*/*Drehbegrenzung kann bevorzugt in Form einer Verkerbung*/*Verprägung an dem ersten Endabschnitt des Gewindebolzens ausgebildet sein.*

*Bevorzugt ist die Kipplasche ein Blechbauteil, welches durch Biegeumformen hergestellt ist.*

Die Kipplasche ist bevorzugt ein zu einem U-Profil gebogenes Blechbauteil mit einheitlicher Wandstärke. Die Kipplasche kann weiterhin bevorzugt als Kunststoffteil ausgeführt sein, welches beispielsweise durch Spritzgießen hergestellt ist. Die Kipplasche umfasst bevorzugt zur Ausbildung des U-Profils einen Stegabschnitt und zwei Flanschabschnitte, welche über den Stegabschnitt miteinander verbunden und orthogonal zum Stegabschnitt angeordnet/ausgerichtet sind. Die Flanschabschnitte verlaufen darüber hinaus bevorzugt parallel zueinander.

Bevorzugt liegen im Befestigungszustand der Sanitärkeramik zugewandte Stirnseiten der Flanschabschnitte an der Innenoberfläche der Sanitärkeramik an.

Auf dem Stegabschnitt ist bevorzugt das Langloch bzw. der Anschlag ausgebildet, welcher eingerichtet ist, die Kipplasche in der Querausrichtung zu halten.

*Ferner kann die erfindungsgemäße Befestigungsvorrichtung derart ausgebildet sein, dass sie einen Abstützabschnitt aufweist, welcher an der zugänglichen Außenoberfläche der* Sanitärkeramik *anliegt und im Zusammenwirken mit der in der Querausrichtung befindlichen Kipplasche das Befestigen der Befestigungsvorrichtung an der* Sanitärkeramik *ermöglicht.*

Der Abstützabschnitt erstreckt sich vorzugsweise radial um eine Längsachse des Gewindebolzens und ist beispielsweise als kreisförmige Scheibe ausgebildet.

Der Abstützabschnitt weist bevorzugt einen Durchmesser bzw. eine Ausdehnung aus, welche größer als die Bohrung/Öffnung der Sanitärkeramik ist, und ist somit bevorzugt eingerichtet, die Befestigungsvorrichtung an der Außenoberfläche der Sanitärkeramik abzustützen.

Der Gewindebolzen umfasst neben dem Abstützabschnitt weiterhin bevorzugt einen Aufnahme- bzw. Adapterabschnitt, einen Zustandsänderungsabschnitt und eine Dichtung, die im Rahmen der untenstehenden Ausführungsform beschrieben werden.

*Überdies kann die erfindungsgemäße Befestigungsvorrichtung so realisiert sein, dass die Kipplasche über einen Querbolzen drehbar auf dem Gewindebolzen gelagert und in der Längsrichtung verfahrbar ist.*

Die Kipplasche ist bevorzugt mittelbar über den Querbolzen mit dem Gewindebolzen verbunden. Der Querbolzen weist vorzugsweise eine zylindrische Form auf. Quer zu einer Längsachse des zylindrischen Querbolzens, um die sich die Kipplasche in den jeweiligen genannten Zuständen drehen kann bzw. dreht, ist bevorzugt eine Bohrung mit einem Innengewinde ausgebildet. Das Innengewinde der Bohrung des Querbolzens greift bevorzugt in das Außengewinde des Gewindebolzens. Dadurch kann der Gewindebolzen bevorzugt in die Bohrung des Querbolzens eingeschraubt werden und ist folglich durch Drehung des Gewindebolzens in der Längsrichtung auf dem Gewindebolzen verfahrbar.

Die Flanschabschnitte weisen bevorzugt konzentrische Löcher/Durchgänge/ Bohrungen auf, welche bestimmungsgemäß zur Verbindung der Kipplasche mit dem Querbolzen eingerichtet sind. Ein Außendurchmesser des zylindrischen Querbolzens stimmt bevorzugt mit einem Innendurchmesser der konzentrischen Löcher in den Flanschabschnitten überein. Dadurch kann die Verbindung zwischen der Kipplasche und dem Querbolzen durch Einführen des zylindrischen Querbolzens in die Löcher in den Flanschabschnitten hergestellt werden. Somit ist die Kipplasche über den Querbolzen drehbar auf dem Gewindebolzen gelagert.

*Vorzugsweise kann die ungleichmäßige Gewichtsverteilung durch eine in Bezug auf eine Längsrichtung der Kipplasche außermittige bzw. asymmetrische Anordnung der Drehlagerung ausgebildet sein.*

Eine Montage und Demontage der erfindungsgemäßen Befestigungsvorrichtung an der Sanitärkeramik weisen folgende Schritte auf:
Einführen des Gewindebolzens und der Kipplasche in die Bohrung/Öffnung, wobei die Kipplasche in dem Montagezustand in der ersten Längsausrichtung in Bezug auf den Gewindebolzen ausgerichtet ist und der Anwender die Kipplasche bevorzugt in diesem Zustand mit dem Finger hält,
Befestigen der Kipplasche, wobei die Kipplasche nach dem Einführen in die Bohrung/Öffnung aufgrund einer in Bezug auf die Drehlagerung vorliegenden Gewichtsverteilung von selbst in die Querausrichtung kippt und die Kipplasche durch Drehung des Gewindebolzens in einer der Bohrung/Öffnung zugewandten Richtung derart verfahren wird, dass sie sich an der Sanitärkeramik abstützt, und, bei Bedarf,
Demontieren der Kipplasche, wobei die Kipplasche durch (entgegengesetzte) Drehung des Gewindebolzens in einer der Bohrung/Öffnung abgewandten Richtung in den Demontagezustand verfahren wird, in dem die Kipplasche aufgrund der in Bezug auf die Drehlagerung vorliegenden Gewichtsverteilung von selbst in die zweite Längsausrichtung weiter kippt und der Gewindebolzen anschließend gemeinsam mit der Kipplasche aus der Bohrung/Öffnung entnommen werden kann.

Erneutes Befestigen der Kipplasche, wobei das Befestigen ausgehend von dem Demontagezustand erfolgt. Dabei wird die Kipplasche nach dem Einführen in die Bohrung/Öffnung durch Verfahren der Kipplasche in der der Bohrung/Öffnung zugewandten Richtung von der zweiten Längsausrichtung in den weiteren Befestigungszustand bzw. die weitere Querausrichtung überführt. Dies erfolgt vorzugsweise, indem der Führungsabschnitt beim Verfahren der Kipplasche in der der Bohrung/Öffnung zugewandten Richtung mit der Sanitärkeramik in Kontakt gelangt. Sobald die Kipplasche in der weiteren Querausrichtung angeordnet ist, stützt sich die Kipplasche vorzugsweise wiederum an der Sanitärkeramik ab.

Dadurch ergeben sich die im Zusammenhang mit der erfindungsgemäßen Befestigungsvorrichtung erläuterten Eigenschaften und Vorteile auf gleiche oder ähnliche Weise, weshalb zur Vermeidung von Wiederholungen auf die vorstehenden Ausführungen im Zusammenhang mit der erfindungsgemäßen Befestigungsvorrichtung verwiesen wird.

Im Folgenden wird eine bevorzugte Ausführungsform der erfindungsgemäßen Befestigungsvorrichtung unter Bezug auf die beigefügten Zeichnungen erläutert.
**Figur 1** zeigt eine perspektivische Ansicht einer erfindungsgemäßen Befestigungsvorrichtung gemäß einer ersten Ausführungsform der Erfindung.
**Figur 2** zeigt eine perspektivische Ansicht der erfindungsgemäßen Befestigungsvorrichtung gemäß der ersten Ausführungsform in einer im Vergleich zu Fig. 1 reduzierten Darstellung in einer Explosionszeichnung.
**Figur 3A** zeigt die erfindungsgemäße Befestigungsvorrichtung von Fig. 2 in einem Montagezustand und **Figur 3B** einen entsprechenden Längsschnitt entlang einer Längsachse eines Gewindebolzens.
**Figur 4A** zeigt die erfindungsgemäße Befestigungsvorrichtung von Fig. 2 in einem Befestigungszustand und **Figur 4B** einen entsprechenden Längsschnitt entlang der Längsachse des Gewindebolzens.
**Figur 5A** zeigt die erfindungsgemäße Befestigungsvorrichtung von Fig. 2 in einem Demontagezustand und **Figur 5B** einen entsprechenden Längsschnitt entlang der Längsachse des Gewindebolzens.
**Figur 6A** zeigt eine erfindungsgemäße Befestigungsvorrichtung gemäß einer zweiten Ausführungsform in dem Montagezustand und **Figur 6B** einen entsprechenden Längsschnitt entlang der Längsachse des Gewindebolzens.
**Figur 7A** zeigt die erfindungsgemäße Befestigungsvorrichtung gemäß der zweiten Ausführungsform in dem Befestigungszustand und **Figur 7B** einen entsprechenden Längsschnitt entlang der Längsachse des Gewindebolzens.
**Figur 8A** zeigt die erfindungsgemäße Befestigungsvorrichtung gemäß der zweiten Ausführungsform in dem Demontagezustand und **Figur 8B** einen entsprechenden Längsschnitt entlang der Längsachse des Gewindebolzens.
**Figur 9** **A bis D** zeigt die erfindungsgemäße Befestigungsvorrichtung gemäß der zweiten Ausführungsform, wobei die Befestigungsvorrichtung ausgehend von dem Demontagezustand (A) in einen weiteren Befestigungszustand (D) überführt wird.

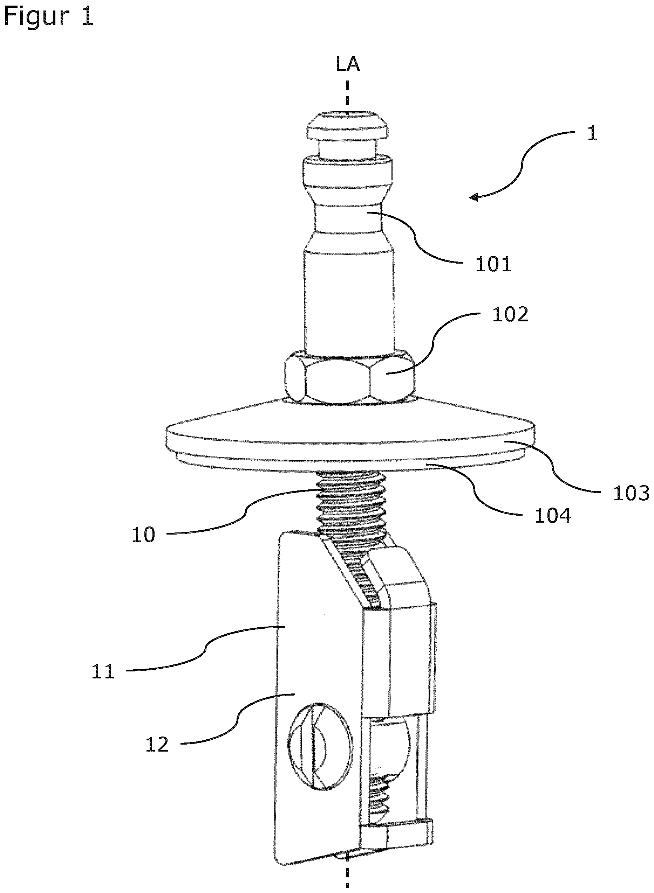

Figur 1 zeigt eine perspektivische Ansicht einer erfindungsgemäßen Befestigungsvorrichtung 1 gemäß einer ersten Ausführungsform der Erfindung. Die Befestigungsvorrichtung 1 dient insbesondere zur Befestigung eines nicht gezeigten WC-Sitzes an einer ebenfalls nicht gezeigten Sanitärkeramik.

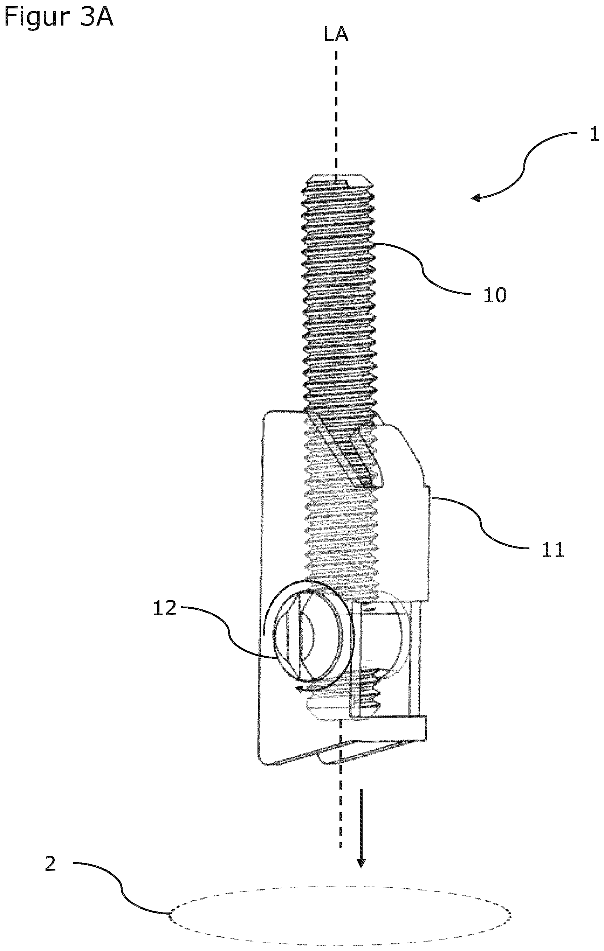

Im dargestellten Fall umfasst die Befestigungsvorrichtung 1 einen Gewindebolzen 10, welcher sich entlang einer Längsrichtung erstreckt und bestimmungsgemäß in eine Bohrung/Öffnung 2 (siehe bspw. Fig. 3A) der Sanitärkeramik, die als Hohlraum ausgeführt ist, eingeführt wird.

Der Gewindebolzen 10 umfasst zwei Endabschnitte, wobei ein erster unterer Endabschnitt bevorzugt in die in den Hohlraum führende Bohrung/Öffnung 2 eingeführt wird und ein zweiter oberer Endabschnitt von außen zugänglich verbleibt. Der Gewindebolzen 10 weist in der dargestellten Ausführungsform ausgehend vom ersten Endabschnitt in Richtung des zweiten Endabschnitts zumindest abschnittsweise ein entlang der Längsachse verlaufendes Außengewinde auf.

Weiterhin ist an dem ersten Endabschnitt des Gewindebolzens 10 ein Aufnahmeabschnitt bzw. Adapterabschnitt 101 ausgebildet, welcher bestimmungsgemäß mit einem WC-Sitz oder einem Gelenk des WC Sitzes verbindbar ist. Der Adapterabschnitt 101 ist bevorzugt ein Stehbolzen/Dorn, der in ein Sackloch in dem WC-Sitz bzw. dem Gelenk eingeführt wird und auf dem der WC-Sitz lastet.

Darüber hinaus ist an dem Gewindebolzen 10 ein Zustandsänderungs-abschnitt 102 ausgebildet. Der Zustandsänderungsabschnitt 102 ist eingerichtet, einen Zustand der Befestigungsvorrichtung 1 durch einen äußeren Einfluss veränderbar zu gestalten. Auf mögliche Zustände der Befestigungsvorrichtung 1 wird im späteren Verlauf noch näher eingegangen.

Der Zustandsänderungsabschnitt 102 kann, wie in Figur 1 dargestellt, als Außensechskantmutter ausgebildet sein, welche in Bezug auf die Längsrichtung unterhalb, in Richtung des zweiten Endabschnitts, des Aufnahmeabschnitts 101 angeordnet ist. Über die Außensechskantmutter kann bevorzugt von außen ein Drehmoment auf den Gewindebolzen 10 aufgebracht werden, sodass dieser um eine Längsachse LA rotiert.

Zudem ist an dem Gewindebolzen 10 in der gezeigten Ausführungsform ein Abstützabschnitt 103 ausgebildet. In der dargestellten Ausführungsform ist der Abstützabschnitt 103 unterhalb des Zustandsänderungsabschnitt 102 angeordnet.

Der Abstützabschnitt 103 erstreckt sich in dem dargestellten Fall radial um die Längsachse LA des Gewindebolzens 10 und ist bevorzugt eine kreisförmige Scheibe. Bevorzugt weist der Abstützabschnitt 103 einen Durchmesser auf, welcher größer ist als die Bohrung/Öffnung 2, in welche die Befestigungsvorrichtung 1 bestimmungsgemäß eingeführt wird. Somit wird durch den Abstützabschnitt 103 eine Abstützung des Gewindebolzens 10 gegenüber einer zugänglichen Außenoberfläche der Sanitärkeramik erreicht.

In der dargestellten Ausführungsform ist in Bezug auf die Längsrichtung unterhalb des Abstützabschnittes 103 eine Dichtung und/oder eine Unterlegscheibe 104 angeordnet, welche einem Eindringen äußerer Medien in die Bohrung/Öffnung 2 bestimmungsgemäß entgegenwirkt.

Die Befestigungsvorrichtung 1 umfasst in der dargestellten Ausführungsform weiterhin eine erfindungswesentliche Kipplasche 11, welche über einen Querbolzen 12 an dem Gewindebolzen 10 befestigt ist.

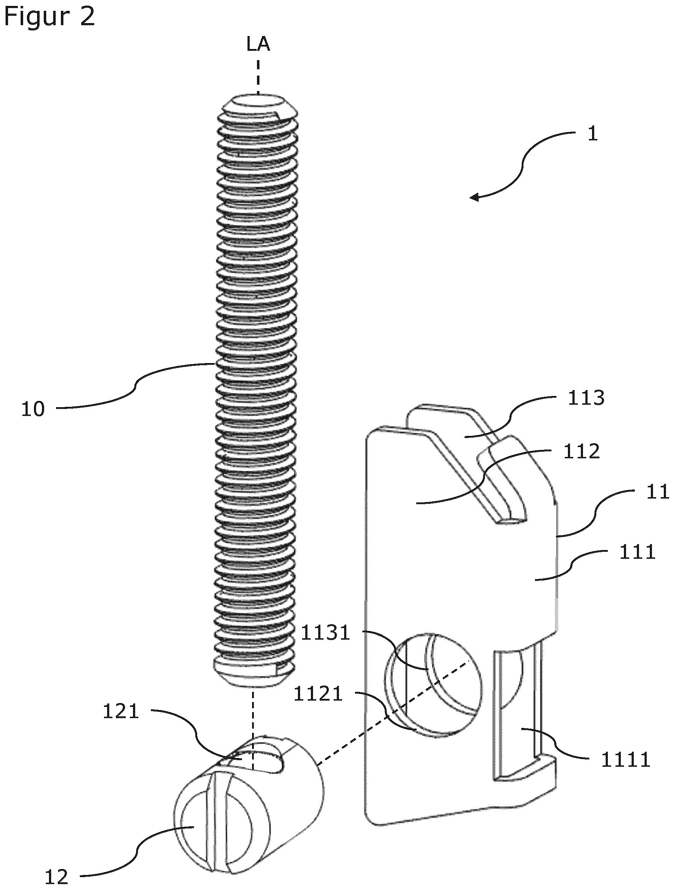

Figur 2 zeigt eine perspektivische Ansicht der erfindungsgemäßen Befestigungsvorrichtung 1 in einer im Vergleich zu Fig. 1 reduzierten Darstellung in einer Explosionszeichnung. Die Darstellung ist auf den Gewindebolzen 10, die Kipplasche 11 und den Querbolzen 12 reduziert.

Die Kipplasche 11 ist in dem dargestellten Fall ein Blechteil, welches in einem ersten Bearbeitungsschritt ausgestanzt bzw. ausgeschnitten wird und in einem weiteren Bearbeitungsschritt durch Biegeumformen in die dargestellte Form überführt wird. Die Kipplasche 11 ist in der dargestellten Form ein zu einem U-Profil gebogenes monolithisches Blechbauteil mit einheitlicher Wandstärke.

Die Kipplasche umfasst einen Stegabschnitt 111 und zwei Flanschabschnitte 112 und 113, welche über den Stegabschnitt 111 miteinander verbunden sind und orthogonal zum Stegabschnitt 111 verlaufen. Die Flanschabschnitte 112 und 113 verlaufen darüber hinaus parallel zueinander.

In dem dargestellten Fall ist die Kipplasche 11 mittelbar über einen Querbolzen 12 mit dem Gewindebolzen 10 verbunden.

Hierzu weisen die Flanschabschnitte 112 und 113 konzentrische Löcher/Durchgänge bzw. Bohrungen 1121 und 1131 auf, welche bestimmungsgemäß zur Verbindung der Kipplasche 11 mit dem Querbolzen 12 dienen/eingerichtet sind.

Der Querbolzen 12 weist vorzugsweise eine zylindrische Form auf. Ein Außendurchmesser des zylindrischen Querbolzens 12 stimmt bevorzugt mit einem Innendurchmesser der konzentrischen Bohrungen 1121 und 1131 in den Flanschabschnitten 112 und 113 überein. Dadurch kann die Verbindung zwischen der Kipplasche 11 und dem Querbolzen 12 durch Einführen des zylindrischen Gewindebolzens 12 in die Löcher 1121 und 1131 hergestellt werden. Dies ist zur Veranschaulichung anhand einer gestrichelten Linie angedeutet. Aufgrund der beschriebenen Verbindung ist die Kipplasche 11 drehbar auf dem Querbolzen 12 gelagert.

Der Querbolzen 12 weist quer zu einer Längsachse eine Bohrung 121 mit einem Innengewinde auf. Das Innengewinde der Bohrung 121 des Querbolzens 12 greift bevorzugt mit dem Außengewinde des Gewindebolzens 10 ineinander. Dadurch kann der Gewindebolzen 10, wie anhand einer weiteren gestrichelten Linie veranschaulicht, in den Querbolzen 12 eingeschraubt werden. Der Querbolzen 12 und somit auch die Kipplasche 10 sind folglich durch Drehung des Gewindebolzens 10 in der Längsrichtung auf dem Gewindebolzen 10 verfahrbar.

Weiterhin weist der Stegabschnitt 111 in dem dargestellten Fall eine längliche Öffnung bzw. ein Langloch 1111 auf, welches im späteren Verlauf der Beschreibung noch näher betrachtet wird.

Figur 3A zeigt die erfindungsgemäße Befestigungsvorrichtung 1 von Fig. 2 in einem Montagezustand.

In dem Montagezustand ist die Kipplasche 11 in einer ersten Längsausrichtung in Bezug auf den Gewindebolzen 10 ausgerichtet, so dass der Gewindebolzen 10 gemeinsam mit der Kipplasche 11 bestimmungsgemäß in die Bohrung/Öffnung 2 einführbar ist. Die Bohrung/Öffnung 2 ist in dem dargestellten Fall durch eine gestrichelte Linie angedeutet. In dem dargestellten Fall ist der Stegabschnitt 111 der Kipplasche 11 parallel zu der Längsachse LA des Gewindebolzens 10 ausgerichtet. Dadurch weist die Befestigungsvorrichtung 1 zumindest abschnittsweise entlang der Längsrichtung des Gewindebolzens 10 einen geringeren Querschnitt auf, welcher ermöglicht, den Gewindebolzen 10 gemeinsam mit dem Querbolzen 12 und der Kipplasche 11 in die in die Sanitärkeramik führende Bohrung/Öffnung 2 einzuführen. Dieser Vorgang ist durch einen Pfeil in Richtung der Bohrung/Öffnung 2 nach unten angedeutet.

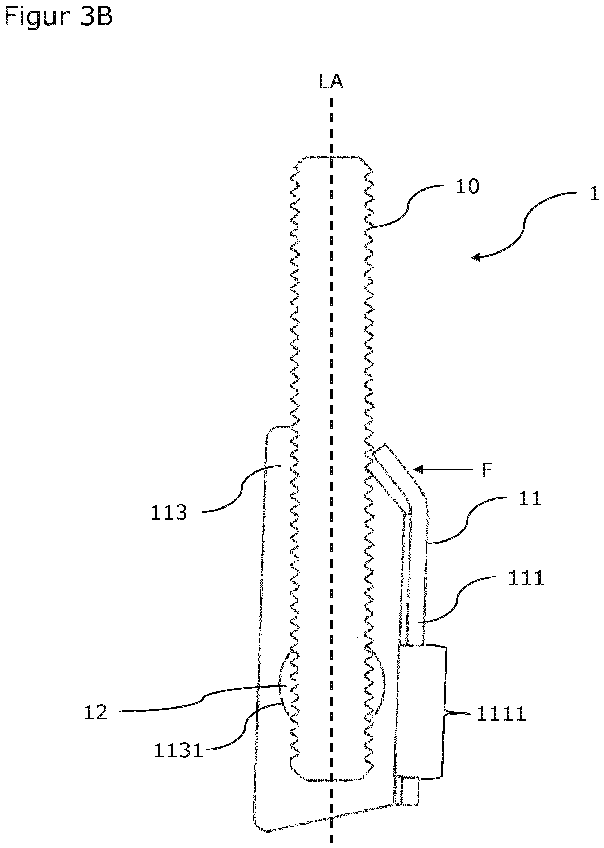

Figur 3B zeigt einen Längsschnitt der Befestigungsvorrichtung 1 im Montagezustand aus Fig. 3A entlang der Längsachse LA des Gewindebolzens 10.

Zur Montage wird die Kipplasche 11, wie dargestellt, an den Gewindebolzen angelegt.

Vorzugsweise weist die Kipplasche eine in Bezug auf die Drehlagerung auf dem Gewindebolzen 10 ungleichmäßige Gewichtsverteilung auf, wodurch ein Drehmoment auf die Kipplasche 11 wirkt. Die ungleichmäßige Gewichtsverteilung ist in dem dargestellten Fall durch eine in Bezug auf eine Längsrichtung der Kipplasche 11 außermittige bzw. asymmetrische Anordnung der Drehlagerung bzw. Gewichtsverteilung ausgebildet. Während der Montage wirkt der Anwender diesem Drehmoment entgegen, indem er bevorzugt mit einem Finger die Kipplasche 11 mit einer Kraft F an den Gewindebolzen drückt.

Der Querschnitt der Befestigungsvorrichtung 11 verbleibt entsprechend gering, sodass der Gewindebolzen 10 gemeinsam mit dem Querbolzen 12 und der Kipplasche 11 in die in die Sanitärkeramik führende Bohrung/Öffnung 2 eingeführt werden kann.

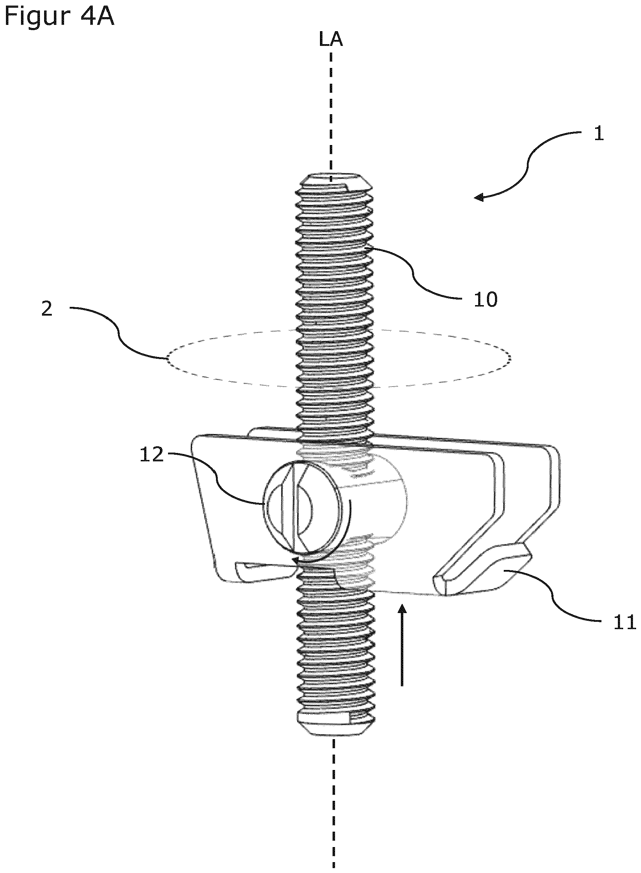

Figur 4A zeigt die erfindungsgemäße Befestigungsvorrichtung 1 von Fig. 2 in einem Befestigungszustand, der, wie folgt, erreicht wird.

Nach dem Einführen der Befestigungsvorrichtung 1 in die Bohrung/Öffnung 2 in der Sanitärkeramik und Entfernen des Fingers dreht bzw. kippt die Kipplasche 11 aufgrund der in Bezug auf die Drehlagerung vorliegenden Gewichtsverteilung von der ersten Längsausrichtung in eine Querausrichtung, in der die Kipplasche 11 dargestellt ist. Die Bohrung/Öffnung 2 in der Sanitärkeramik ist wiederum durch die gestrichelte Linie angedeutet.

Durch die in der Querausrichtung vorliegende Kipplasche 11 ist der Querschnitt entlang der Längsrichtung des Gewindebolzens 10 derart vergrößert, dass die Kipplasche 11 die Bohrung/Öffnung 2 überdeckt. Die Kipplasche 11 kann in der Querausrichtung durch Drehung des Gewindebolzens 10 in einer der Bohrung/Öffnung 2 zugewandten Richtung verfahren werden, wie durch einen weiteren Pfeil angedeutet, bis sich die Kipplasche 11 an der Sanitärkeramik abstützt und die Befestigungsvorrichtung 1 an der Bohrung/Öffnung 2 der Sanitärkeramik befestigt bzw. festgeklemmt ist.

Zu beachten ist dabei, dass sich die Kipplasche 11 während des Befestigens mit dem Gewindebolzen 10 nicht mitdreht, so dass diese in der Längsrichtung verfahren wird. Beispielsweise kann die Kipplasche 11 zum einen über eine gewisse Trägheit verfügen, welche die Kipplasche 11 daran hindert, sich gemeinsam mit dem Gewindebolzen 10 zu drehen. Zum anderen kann ein Monteur die Kipplasche 11, welche sich in der Querausrichtung befindet, an eine Innenoberfläche der Sanitärkeramik durch Ziehen an dem Stehbolzen 101 andrücken, so dass eine Reibwirkung zwischen der Innenwand der Sanitärkeramik und der Kipplasche 11 entsteht und sich diese nicht gemeinsam mit dem Gewindebolzen 10 dreht. Weiterhin kann der Hohlraum der Sanitärkeramik derart ausgebildet sein, dass dieser die Drehbewegung der Kipplasche 11 begrenzt.

Der in Fig. 4A nicht gezeigte Abstützabschnitt 103 liegt je nach Befestigungsmethode an einer Außenoberfläche der Sanitärkeramik an und dient als Gegenlager. Der Abstützabschnitt 103 ist bevorzugt mit dem Gewindebolzen 10 nicht fest verbunden bzw. ist in Bezug auf den Drehbolzen drehbar, so dass er beim Befestigen auf der Sanitärkeramik aufliegt und die Drehung des Gewindebolzens 10 nicht beeinträchtigt. Somit ermöglicht das Zusammenwirken des Abstützabschnittes 103 mit der in der Querausrichtung befindlichen Kipplasche 11 das Befestigen/Festziehen der Befestigungsvorrichtung 1 an der Sanitärkeramik. Das Festziehen kann durch Aufbringen des Drehmomentes auf die Sechskantmutter 102 mittels eines Schlüssels erfolgen.

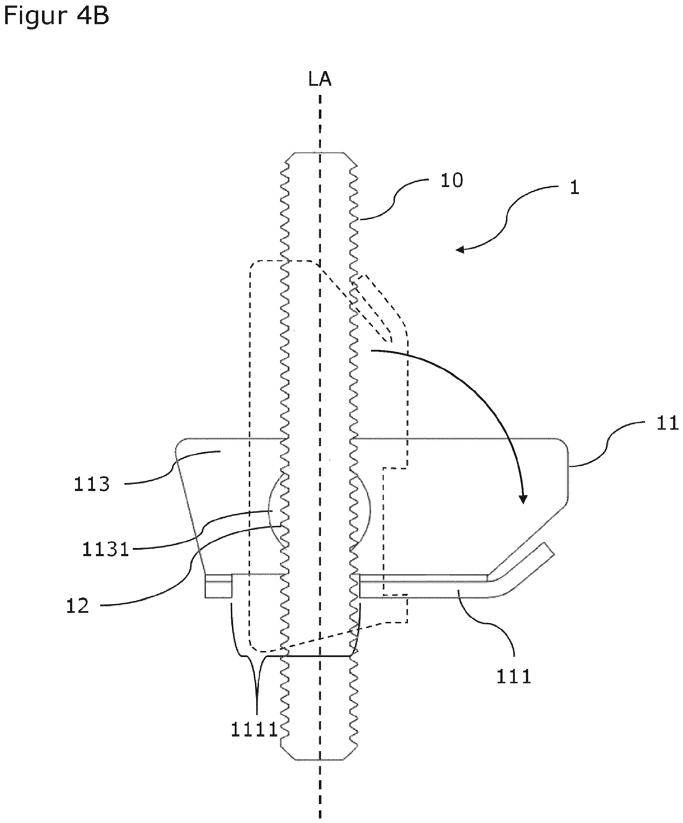

Figur 4B zeigt einen Längsschnitt der Befestigungsvorrichtung 1 im Befestigungszustand aus Fig. 4A entlang der Längsachse LA des Gewindebolzens 10.

Die Kipplasche 11 wird im Montagezustand durch den Monteur, wie in Bezug auf Fig. 3B beschrieben wurde, an den Gewindebolzen 10 gedrückt. Nachdem der Monteur den Finger von der Kipplasche 10 löst, kippt die Kipplasche 11 aufgrund der ungleichmäßigen Gewichtsverteilung in die Querausrichtung. In der dargestellten Form ist die Kipplasche 11 im Zustand vor der Kippbewegung durch eine gestrichelte Linie angedeutet und die entsprechende Kippbewegung ist durch einen Pfeil veranschaulicht.

Alternativ kann die Kipplasche 11 im Montagezustand auch derart auf dem Gewindebolzen 10 positioniert sein, dass der untere Teil des Stegabschnitts 111 an dem Gewindebolzen 10 anliegt und die weitere Kippbewegung entsprechend beschränkt. In diesem Fall wird die Kipplasche 11 durch Drehen des Gewindebolzens 10 zunächst in der Längsrichtung ein wenig nach unten versetzt bis die Kippbewegung aus der ersten Längsausrichtung heraus nicht mehr durch den Stegabschnitt 111 beschränkt ist.

Die Kipplasche 11 weist einen Anschlag auf, welcher eingerichtet ist, die Kipplasche in der Querausrichtung zu halten, indem der Anschlag am Gewindebolzen 10 anliegt und ein weiteres Kippen der Kipplasche 11 infolge der vorliegenden Gewichtsverteilung verhindert. In dem dargestellten Fall ist der Anschlag durch das Langloch 1111 auf dem Stegabschnitt 111 gebildet. Die längliche Form des Langlochs 1111 ermöglicht die Kippbewegung der Kipplasche 11 von der ersten Längsausrichtung bis zu der Querausrichtung, in welcher sich die Kipplasche 11 mit einer Innenseite des Langloches 1111 an dem Gewindebolzen 10 abstützt und somit ein Weiterkippen beschränkt.

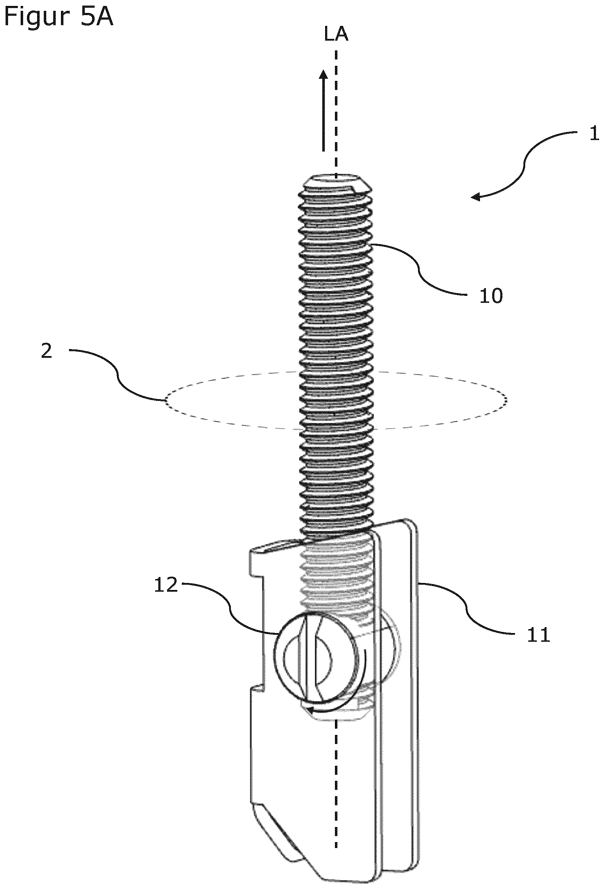

Figur 5A zeigt die erfindungsgemäße Befestigungsvorrichtung 1 von Fig. 2 in einem Demontagezustand, der, wie folgt, erreicht wird.

Zur Demontage der Befestigungsvorrichtung 1 wird die Kipplasche 11 durch Drehung des Gewindebolzens 10 in einer der Bohrung/Öffnung 2 abgewandten Richtung in einen Demontagezustand verfahren/versetzt, in der die Kipplasche 11 aufgrund der in Bezug auf die Drehlagerung vorliegenden Gewichtsverteilung von selbst in eine zweite Längsausrichtung weiter kippt.

In dem dargestellten Fall ist der Stegabschnitt 111 der Kipplasche 11 somit wieder parallel zu der Längsachse LA des Gewindebolzens 10 ausgerichtet. Die Kipplasche 11 ist im Vergleich zum Montagezustand in Bezug auf die Drehlagerung um 180° gedreht. Dadurch weist die Befestigungsvorrichtung 1 zumindest abschnittsweise entlang der Längsrichtung des Gewindebolzens 10 wiederum einen geringen Querschnitt auf, welcher ermöglicht, den Gewindebolzen 10 gemeinsam mit dem Querbolzen 12 und der Kipplasche 11 aus der Bohrung/Öffnung 2 zu entnehmen. Dieser Vorgang ist wiederum durch einen Pfeil nach oben angedeutet.

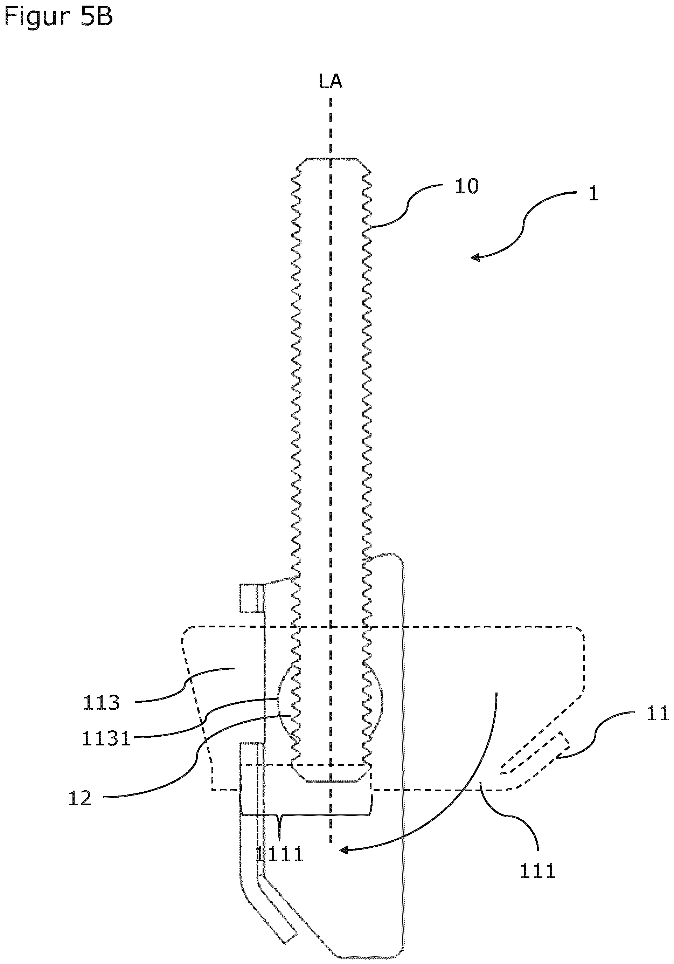

Figur 5B zeigt einen Längsschnitt der Befestigungsvorrichtung 1 im Demontagezustand aus Fig. 5A entlang der Längsachse LA des Gewindebolzens 10.

Das Verfahren/Versetzen der Kipplasche 10 in der der Bohrung/Öffnung 2 abgewandten Richtung bewirkt, dass der durch das Langloch 1111 gebildete Anschlag der Kipplasche 11 den ersten Endabschnitt des Gewindebolzens 10 überschreitet und folglich nicht mehr am Gewindebolzen 10 anliegt. Somit kippt die Kipplasche 11 infolge der vorliegenden Gewichtsverteilung von der Querausrichtung, welche in der dargestellten Form durch eine gestrichelte Linie angedeutet ist, in die zweite Längsausrichtung. Die entsprechende Kippbewegung ist durch einen Pfeil veranschaulicht.

In dem dargestellten Fall ist der Anschlag durch das Langloch 1111 in der Kipplasche 11 gebildet. Durch das Verfahren der Kipplasche 11 über den ersten Endabschnitt des Gewindebolzens 10 hinaus liegt die Innenseite des Langloches 1111 nicht mehr an dem Gewindebolzen 10 an und beschränkt das Weiterkippen somit nicht.

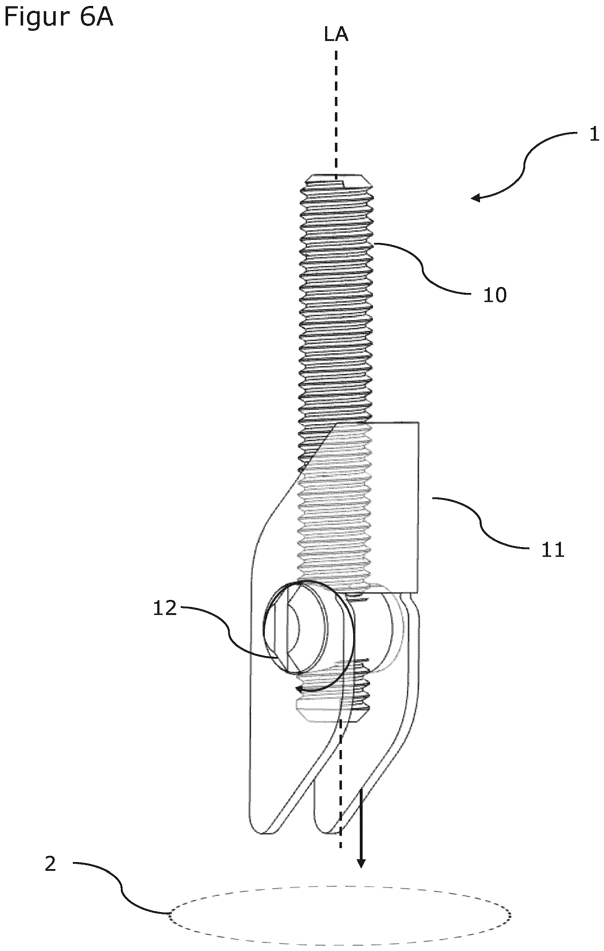

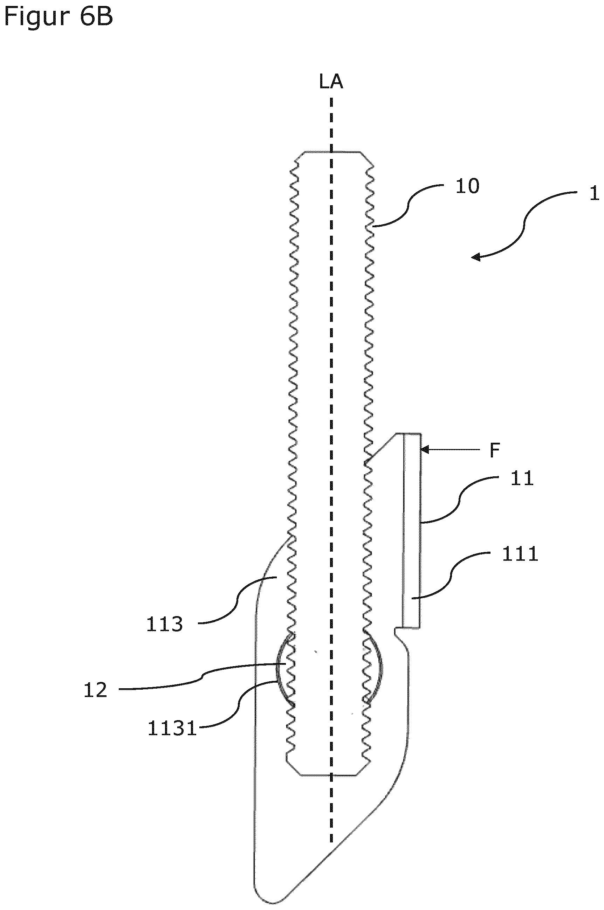

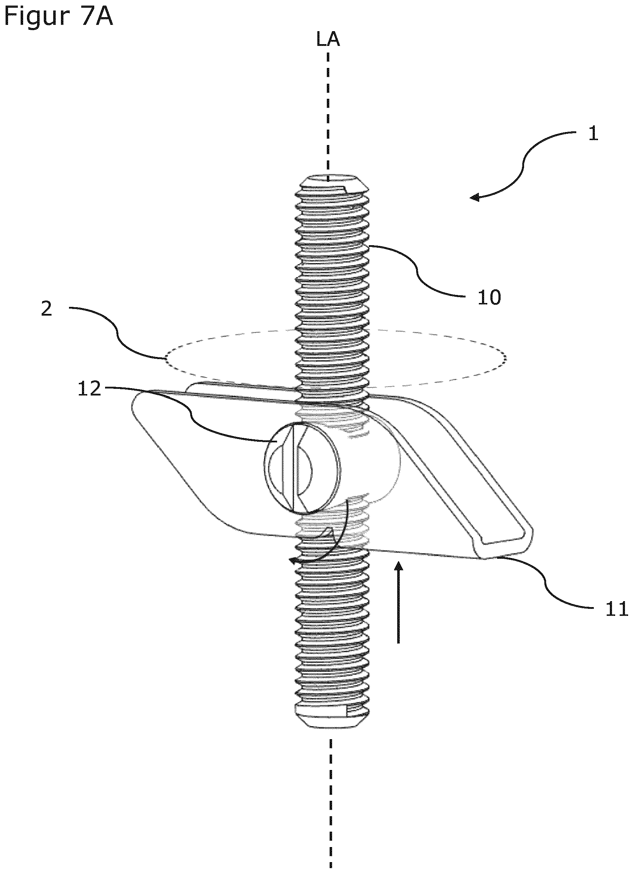

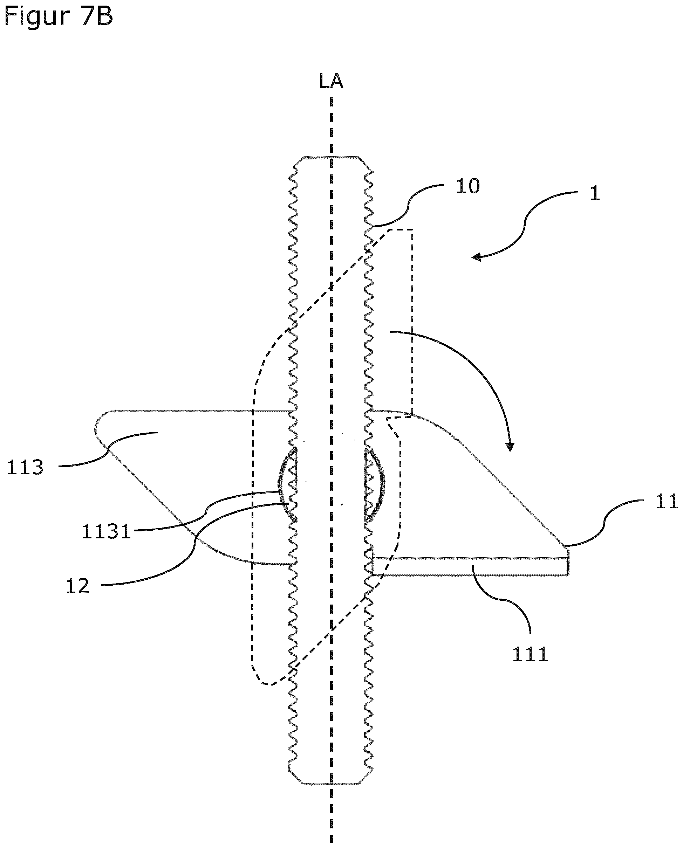

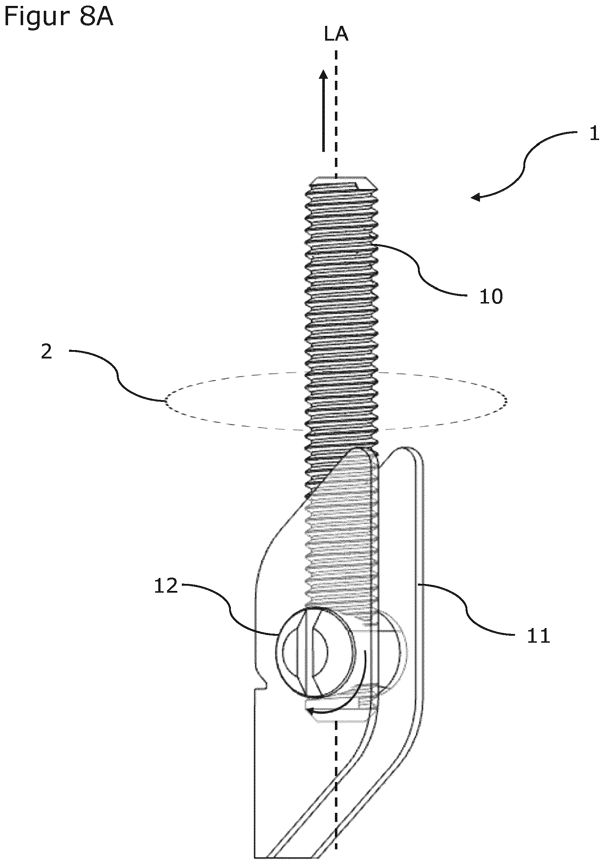

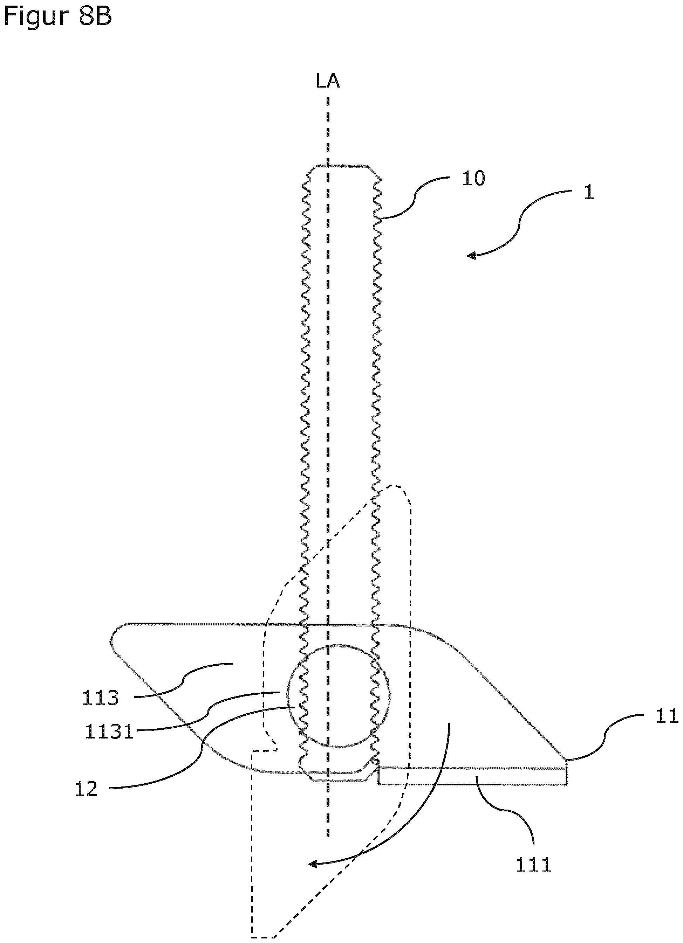

Die Figuren 6A bis 9D zeigen eine erfindungsgemäße Befestigungsvorrichtung 1 gemäß einer zweiten Ausführungsform der Erfindung. Die Befestigungsvorrichtung 1 gemäß der zweiten Ausführungsform ist in analoger Weise zu der Befestigungsvorrichtung 1 gemäß der ersten Ausführungsform aufgebaut. Die vorstehenden Erläuterungen gelten entsprechend auch für die Befestigungsvorrichtung 1 nach der zweiten Ausführungsform. Die nachfolgenden Erläuterungen beziehen sich folglich insbesondere auf die Unterschiede der zweiten Ausführungsform zu der ersten Ausführungsform.

Wie bereits im Zusammenhang mit der ersten Ausführungsform der Erfindung erläutert, können auch mit der Befestigungsvorrichtung 1 gemäß der zweiten Ausführungsform der Montagezustand, der Befestigungszustand und der Demontagezustand in analoger Weise hergestellt werden. Deshalb wird hinsichtlich der Beschreibung der Figuren 6A bis 8B, in welcher die entsprechenden Zustände gezeigt sind, auf die vorstehende Beschreibung in Bezug auf die erste Ausführungsform im Zusammenhang mit den Figuren 3A bis 5B verwiesen.

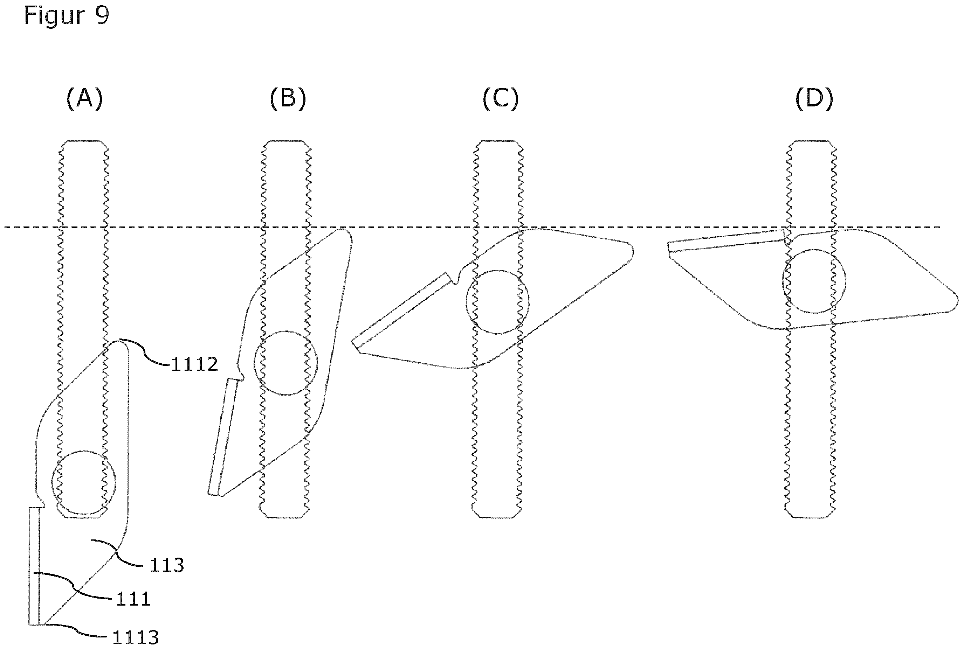

Darüber hinaus weist die Befestigungsvorrichtung 1 gemäß der zweiten Ausführungsform eine Zusatzfunktion auf. Diese ist in den Figuren 9 A bis D veranschaulicht.

Die Befestigungsvorrichtung 1 gemäß der zweiten Ausführungsform kann, aufgrund ihrer Ausgestaltung, auch ausgehend von dem Demontagezustand bzw. ausgehend von der zweiten Längsausrichtung, wie in Figur 9 A gezeigt, in einen weiteren Befestigungszustand überführt werden bzw. an der Sanitärkeramik befestigt werden.

Diesbezüglich ist ein Führungsabschnitt 1112 an einer in Bezug auf die Drehlagerung dem Anschlag abgewandten Seite der Kipplasche 11 vorgesehen. In der zweiten Längsausrichtung, welche in der Figur 9 A veranschaulicht ist, ist der Führungsabschnitt 1112 somit der Bohrung/Öffnung 2 bzw. der Innenoberfläche der Sanitärkeramik zugewandt, während der Anschlag auf der in Bezug auf die Drehlagerung abgewandten Seite der Innenoberfläche angeordnet ist.

Im konkret dargestellten Fall ist der Führungsabschnitt 1112 in Form einer abgerundeten Spitze ausgebildet, indem die Flanschabschnitte 112 und 113 jeweils ausgehend von der Drehlagerung der Kipplasche 11 in Richtung des Stegabschnitts 111 abflachen.

Zur Befestigung der Befestigungsvorrichtung 1 wird die Kipplasche 11, wie in den Figuren 9 B bis D veranschaulicht, durch Drehung des Gewindebolzens 10 in Richtung der Bohrung/Öffnung 2 in die weitere bzw. zweite Querausrichtung überführt. Wie in Figur 9 B gezeigt, gelangt bei Verfahren/Versetzen der Kipplasche 11 zunächst die abgerundete Spitze in Kontakt mit der Innenoberfläche der Sanitärkeramik. Dies bewirkt, dass eine durch das Verfahren/Versetzen hervorgerufene Längsbewegung der Kipplasche 11 in eine Drehbewegung überführt wird. Bei weiterem Verfahren/Versetzen der Kipplasche 11, wie in Figur 9 C veranschaulicht, wird die Drehbewegung der Kipplasche 11 durch den Kontakt der abflachenden Stegabschnitte 111 mit der Innenoberfläche der Sanitärkeramik fortgesetzt, bis sich die Kipplasche 11 in der weiteren Querausrichtung befindet, wie in Figur 9 D gezeigt. In diesem Zustand stützt sich die Kipplasche 11 an der Sanitärkeramik ab und die Befestigungsvorrichtung 1 ist an der Sanitärkeramik befestigt bzw. festgeklemmt ist.

Die Kipplasche 11 ist in der weiteren Querausrichtung im Vergleich zu der Querausrichtung, in welcher die Kipplasche 11 im vorstehend erläuterten Befestigungszustand befindet, in Bezug auf die Drehlagerung um 180° gedreht.

Aufgrund dieser Zusatzfunktion kann die Befestigungsvorrichtung 1 unabhängig von einer jeweiligen Längsausrichtung der Kipplasche 11 in Bezug auf die Drehlagerung befestigt werden.

Weiterhin kann ein entsprechender weiterer Führungsabschnitt 1113 auch auf der Seite des Anschlags ausgebildet sein. Dieser weitere Führungsabschnitt 1113 ist bevorzugt in Bezug auf die Drehlagerung punktsymmetrisch zum vorstehend beschriebenen Führungsabschnitt 1112 ausgebildet. Somit kann die Kipplasche 11 auch dann in die (erste) Querausrichtung überführt werden, wenn die Kipplasche 11 nicht selbstständig aufgrund der in Bezug auf die Drehlagerung vorliegenden Gewichtsverteilung in die Querausrichtung kippt. Dies kommt beispielsweise zum Tragen, wenn die Drehlagerung nicht frei beweglich sein sollte, insbesondere, wenn Verschmutzungen oder Fremdpartikel im Bereich der Drehlagerung vorliegen.

Gemäß einer dritten Ausführungsform der Erfindung weist der Gewindebolzen 10 an dem ersten Endabschnitt eine Beschränkung, wie beispielsweise eine Verkerbung/Verprägung auf, welche das Verfahren der Kipplasche begrenzt. Das Versetzen der Kipplasche 11 ist damit derart begrenzt, dass sich der Querbolzen 12 bzw. die Kipplasche 11 nicht vom Gewindebolzen 10 lösen und zusammen mit der Kipplasche 11 in den unzugänglichen Innenraum bzw. Hohlraum der Sanitärkeramik fallen kann. Die vorstehend beschriebene Beschränkung kann sowohl in Verbindung mit der ersten Ausführungsform der Erfindung als auch in Verbindung mit der zweiten Ausführungsform der Erfindung realisiert werden. Darüber hinaus kann dieser Aspekt jedoch auch als eigenständige Erfindung angesehen werden.

## Patentansprüche

1. Befestigungsvorrichtung (1) zur Befestigung eines WC-Sitzes an einer Sanitärkeramik, aufweisend:
einen sich entlang einer Längsrichtung erstreckenden Gewindebolzen (10), der bestimmungsgemäß in Richtung der Längsrichtung in eine in der Sanitärkeramik vorgesehene Bohrung/Öffnung (2) einführbar ist, und
eine drehbar auf dem Gewindebolzen (10) gelagerte Kipplasche (11), welche auf dem Gewindebolzen (10) in der Längsrichtung durch Drehung des Gewindebolzens (10) verfahrbar ist, wobei
die Kipplasche (11) in einem Montagezustand in einer ersten Längsausrichtung in Bezug auf den Gewindebolzen (10) ausgerichtet ist, so dass der Gewindebolzen (10) gemeinsam mit der Kipplasche (11) bestimmungsgemäß in die Bohrung/Öffnung (2) einführbar ist,
die Kipplasche (11) in einem Befestigungszustand nach dem Einführen in die Bohrung/Öffnung (2) aufgrund einer in Bezug auf die Drehlagerung vorliegenden Gewichtsverteilung bestimmungsgemäß von selbst in eine Querausrichtung kippt, so dass die Kipplasche (11) durch Drehung des Gewindebolzens (10) in einer der Bohrung/Öffnung (2) zugewandten Richtung derart verfahrbar ist, dass sie sich an der Sanitärkeramik abstützt, und
die Kipplasche (11) bestimmungsgemäß durch Drehung des Gewindebolzens (10) in einer der Bohrung/Öffnung (2) abgewandten Richtung in einen Demontagezustand verfahrbar ist, in dem die Kipplasche (11) aufgrund der in Bezug auf die Drehlagerung vorliegenden Gewichtsverteilung von selbst in eine zweite Längsausrichtung weiter kippt, so dass der Gewindebolzen (10) gemeinsam mit der Kipplasche (11) aus der Bohrung/Öffnung (2) entnehmbar ist.

2. Befestigungsvorrichtung (1) nach Anspruch 1, wobei
die Kipplasche (11) einen Anschlag aufweist, welcher eingerichtet ist, die Kipplasche (11) in der Querausrichtung zu halten, indem der Anschlag am Gewindebolzen (10) anliegt und ein weiteres Kippen der Kipplasche (11) infolge der vorliegenden Gewichtsverteilung verhindert.

3. Befestigungsvorrichtung (1) nach Anspruch 2, wobei
der Anschlag durch das Verfahren der Kipplasche (11) in den Demontagezustand einen Endabschnitt des Gewindebolzens (10) überschreitet und folglich nicht mehr am Gewindebolzen (10) anliegt, so dass die Kipplasche (11) infolge der vorliegenden Gewichtsverteilung in die zweite Längsausrichtung kippt.

4. Befestigungsvorrichtung (1) nach einem der Ansprüche 1 bis 3, wobei
die ungleichmäßige Gewichtsverteilung durch eine in Bezug auf eine Längsrichtung der Kipplasche (11) außermittige bzw. asymmetrische Anordnung der Drehlagerung ausgebildet ist.

5. Befestigungsvorrichtung (1) nach einem der Ansprüche 2 bis 4, wobei
die Kipplasche (11) ausgehend von dem Demontagezustand in einen weiteren Befestigungszustand überführt werden kann, indem die Kipplasche (11) einen Führungsabschnitt (1112) an einer in Bezug auf die Drehlagerung dem Anschlag abgewandten Seite aufweist, welcher eingerichtet ist, bei Verfahren der Kipplasche (11) in der der Bohrung/ Öffnung (2) zugewandten Richtung derart mit der Sanitärkeramik in Kontakt zu gelangen, dass die Kipplasche (11) von der zweiten Längsausrichtung in eine weitere Querausrichtung überführt wird.

6. Befestigungsvorrichtung (1) nach Anspruch 5, wobei
der Führungsabschnitt (1112) bei Verfahren in der der Bohrung/Öffnung (2) zugewandten Richtung die Kipplasche (11) von der zweiten Längsausrichtung in die weitere Querausrichtung überführt, indem der Führungsabschnitt (1112) eine durch das Verfahren gebildete Längsbewegung der Kipplasche (11) in eine Drehbewegung umwandelt.

7. Befestigungsvorrichtung (1) nach Anspruch 6, wobei
der Führungsabschnitt (1112) in Form einer abgerundeten Spitze an der Kipplasche (11) ausgebildet ist, wobei die abgerundete Spitze, bei Kontakt mit der Sanitärkeramik in einem Bereich um die Bohrung/ Öffnung (2) herum, die Längsbewegung in die Drehbewegung umwandelt.

8. Befestigungsvorrichtung (1) nach einem der Ansprüche 2 bis 7, wobei
die Kipplasche (11) an einer Seite ein Langloch (1111) aufweist, welches im Befestigungszustand den Anschlag ausbildet.

9. Befestigungsvorrichtung (1) zur Befestigung eines WC-Sitzes an einer Sanitärkeramik, aufweisend:
einen sich entlang einer Längsrichtung erstreckenden Gewindebolzen (10), der bestimmungsgemäß in Richtung der Längsrichtung in eine in der Sanitärkeramik vorgesehene Bohrung/Öffnung (2) einführbar ist, und
eine auf dem Gewindebolzen (10) gelagerte Kipplasche (11), welche auf dem Gewindebolzen (10) in der Längsrichtung durch Drehung des Gewindebolzens (10) verfahrbar ist, wobei
der Gewindebolzen (10) gemeinsam mit der Kipplasche (11) in einem Montagezustand bestimmungsgemäß in die Bohrung/Öffnung (2) einführbar ist,
die Kipplasche (11) in einem Befestigungszustand durch Drehung des Gewindebolzens (10) in einer der Bohrung/Öffnung (2) zugewandten Richtung derart verfahrbar ist, dass sie sich an der Sanitärkeramik abstützt, und
die Kipplasche (11) bestimmungsgemäß durch Drehung des Gewindebolzens (10) in einer der Bohrung/Öffnung (2) abgewandten Richtung in einen Demontagezustand verfahrbar ist, so dass der Gewindebolzen (10) gemeinsam mit der Kipplasche (11) aus der Bohrung/Öffnung (2) entnehmbar ist, wobei
der Gewindebolzen (10) an einem Endabschnitt eine Beschränkung aufweist, welche das Verfahren der Kipplasche (11) über den Demontagezustand hinaus begrenzt.

10. Befestigungsvorrichtung (1) nach Anspruch 9, wobei
die Beschränkung derart ausgebildet ist, dass die Kipplasche (11) sich beim Verfahren in der der Bohrung/Öffnung (2) abgewandten Richtung nicht von dem Gewindebolzen (10) lösen kann.

11. Befestigungsvorrichtung (1) nach Anspruch 9 oder 10, wobei
die Beschränkung durch eine Verkerbung oder eine Verprägung gebildet ist.

12. Befestigungsvorrichtung (1) nach Anspruch 1 bis 11, wobei
die Kipplasche (11) ein Blechbauteil ist, welches durch Biegeumformen hergestellt ist.

13. Befestigungsvorrichtung (1) nach einem der Ansprüche 1 bis 12, wobei
die Befestigungsvorrichtung (1) einen Abstützabschnitt (103) aufweist, welcher an einer zugänglichen Außenoberfläche der Sanitärkeramik anliegt und im Zusammenwirken mit der in der Querausrichtung befindlichen Kipplasche (11) das Befestigen der Befestigungsvorrichtung an der Sanitärkeramik ermöglicht.

14. Befestigungsvorrichtung (1) nach einem der Ansprüche 1 bis 13, wobei
die Kipplasche (11) über einen Querbolzen (12) drehbar auf dem Gewindebolzen (10) gelagert und in der Längsrichtung verfahrbar ist.
